# EUROPÄISCHE PATENTSCHRIFT

(11) **EP 2 196 779 B1**
(45) Veröffentlichungstag und Bekanntmachung des Hinweises auf die Patenterteilung: **09.08.2017**
(21) Anmeldenummer: 09014039.3
(22) Anmeldetag: 10.11.2009
(51) Int. Cl.: G01F 1/58, G01F 15/14

(54) **Magnetisch-induktives Durchflussmessgerät**
Magnetic-inductive flowmeter
Débitmètre à induction magnétique

(30) Priorität: 17.11.2008 DE 102008057756
(43) Veröffentlichungstag der Anmeldung: 16.06.2010
(73) Patentinhaber: Krohne AG, 4019 Basel (CH)
(72) Erfinder: Gonzàlez Pelayo, Juan Carlos, 4194 TX Meteren (NL)
(74) Vertreter: Gesthuysen Patent- und Rechtsanwälte

(56) Entgegenhaltungen:
- EP-A1- 1 666 849
- WO-A2-90/07694
- DE-A1- 19 708 857
- US-A- 4 459 857

## Beschreibung

Die Erfindung betrifft ein magnetisch-induktives Durchflußmeßgerät zur Durchflußmessung eines strömenden Mediums gemäss dem Oberbegriff von Anspruch 1. Magnetisch-induktive Durchflußmeßgeräte sind sehr umfangreich im Stand der Technik seit Jahrzehnten bekannt; dazu wird exemplarisch auf die Literaturstelle "Technische Durchflußmessung" von Prof. Dr.-Ing. K. W. Bonfig, 3. Auflage, Vulkan-Verlag Essen, 2002, Seiten 123 bis 167, verwiesen. Weitere magnetisch-induktive Durchflussmessgeräte sind aus US 4,459,857 und WO 90/07694 bekannt. Das grundlegende Prinzip eines magnetisch-induktiven Durchflußmeßgeräts zur Durchflußmessung eines strömenden Mediums geht auf Faraday zurück, der bereits im Jahre 1832 vorgeschlagen hat, das Prinzip der elektrodynamischen Induktion zur Messung der Strömungsgeschwindigkeit eines strömenden Mediums anzuwenden. Nach dem faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das faraday'sche Induktionsgesetz wird bei magnetisch-induktiven Durchflußmeßgeräten dadurch ausgenutzt, das mittels einer Magnetfelderzeugungseinrichtung, die üblicherweise zwei bestromte Magnetspulen aufweist, ein Magnetfeld erzeugt und wenigstens teilweise durch eine Meßleitung geführt wird, wobei das erzeugte Magnetfeld wenigstens eine Komponente aufweist, die senkrecht zur Strömungsrichtung verläuft. Innerhalb des Magnetfeldes liefert jedes sich durch das Magnetfeld bewegende und eine gewisse Anzahl von Ladungsträgern aufweisenden Volumenelement des strömenden Mediums mit der in diesem Volumenelement entstehenden Feldstärke einen Beitrag zu einer über die Elektroden abgreifbaren Meßspannung.

Sind, wie weiter oben ausgeführt, magnetisch-induktive Durchflußmeßgeräte seit Jahrzehnten umfangreich und in einer kaum noch überschaubaren Vielzahl von Ausführungsformen bekannt, so sind auch in bezug auf magnetisch-induktive Durchflußmeßgeräte, wie in vielen weitgehend entwickelten Gebieten der Technik, immer noch Fortschritte erwünscht und auch möglich. Folglich liegt der Erfindung die Aufgabe zugrunde, das eingangs in seinem grundsätzlichen Aufbau beschriebene magnetisch-induktive Durchflußmeßgerät zu verbessern, und zwar nach ganz unterschiedlichen Gesichtspunkten, die jeweils für sich, aber auch in ihrer Gesamtheit von Bedeutung sind.

Das erfindungsgemäße magnetisch-induktive Durchflußmeßgerät wird durch die Merkmale des kennzeichnenden Teils von Anspruch 1 charakterisiert. Im mittleren Bereich der Meßleitung ist mindestens eine die Meßleitung mit dem Gehäuse verbindende Verstärkung vorgesehen Damit ist erreicht, daß bei dem erfindungsgemäßen magnetisch-induktiven Durchflußmeßgerät die Meßleitung einerseits und das Gehäuse andererseits konstruktiv ganz unterschiedlich ausgelegt und ausgeführt sein können. So können bei der Auslegung und der Ausführung der Meßleitung sowohl strömungstechnische als auch induktionstechnische Überlegungen vorherrschend sein, während bei der Auslegung und der Ausführung des Gehäuses in der Regel mechanische Überlegungen überwiegen. Dadurch, daß erfindungsgemäß im mittleren Bereich der Meßleitung dieses durch eine die Meßleitung mit dem Gehäuse verbindende Verstärkung vorgesehen ist, kann die Meßleitung auch dann die notwendige Druckbeanspruchbarkeit haben, die ohne die erfindungsgemäß vorgesehene Verstärkung nicht gegeben wäre. Als Verstärkung ist im mittleren Bereich der Meßleitung mindestens eine Stütze - zwischen der Meßleitung und dem Gehäuse - vorgesehen.

Insbesondere dann, aber nicht nur dann, wenn bei dem erfindungsgemäßen magnetisch-induktiven Durchflußmeßgerät als Verstärkung eine und nur eine Stütze zwischen der Meßleitung und dem Gehäuse vorgesehen ist, kann es sich empfehlen, im mittleren Bereich der Meßleitung einen die Meßleitung umfassenden Verstärkungsring vorzusehen und die Meßleitung über den Verstärkungsring und die Verstärkung, gegebenenfalls also über die als Verstärkung vorgesehene Stütze, mit dem Gehäuse zu verbinden.

Kann bei einem erfindungsgemäßen magnetisch-induktiven Durchflußmeßgeräts als Verstärkung nur eine Stütze zwischen der Meßleitung und dem Gehäuse vorgesehen sein, so empfiehlt sich ein solcher unsymmetrischer Aufbau jedoch nicht. Vielmehr wird man vorzugsweise mindestens zwei die Meßleitung mit dem Gehäuse verbindende Stützen vorsehen.

Zuvor ist darauf hingewiesen worden, daß bei dem erfindungsgemäßen magnetisch-induktiven Durchflußmeßgerät im mittleren Bereich der Meßleitung ein die Meßleitung umfassender Verstärkungsring vorgesehen sein kann. Zusätzlich - oder alternativ - kann auch das Gehäuse in seinem mittleren Bereich mit einem - innen oder außen angeordneten - Verstärkungsring versehen sein.

Ist bei dem erfindungsgemäßen magnetisch-induktiven Durchflußmeßgerät im mittleren Bereich der Meßleitung als die Meßleitung mit dem Gehäuse verbindende Verstärkung mindestens eine Stütze vorgesehen, so gibt es verschiedene Möglichkeiten, diese Stütze oder - wenn mehrere vorgesehen sind - die Stützen konstruktiv und/oder funktional auszugestalten. Besonders vorteilhaft ist es, die Stütze, wenn mehrere Stützen vorgesehen sind, zumindest einzelne Stützen oder aber auch alle Stützen als Hohlzylinder auszuführen, vorzugsweise als kreisförmige Hohlzylinder. Eine solche Ausführung gibt die Möglichkeit, auf den die Meßleitung mit dem Gehäuse verbindenden Stützen oder innerhalb dieser Stützen die zur Magnetfelderzeugungseinrichtung gehörenden Magnetspulen vorzusehen und/oder innerhalb der die Meßleitung mit dem Gehäuse verbindenden Stützen die die induzierte Spannung abgreifenden Elektroden anzuordnen.

Bei dem magnetisch-induktiven Durchflußmegerät kann die Meßleitung, wie üblich, den Strömungskanal für strömende Medien, dessen Durchfluß gemessen werden soll, darstellen. Eine besonders bevorzugte Ausführungsform des erfindungsgemäßen magnetisch-induktiven Durchflußmeßgeräts ist jedoch abweichend von der zuvor angesprochenen üblichen Ausführungsform realisiert. Diese Ausführungsform ist nämlich dadurch gekennzeichnet, daß innerhalb des Gehäuses mindestens ein Meßleitungsbildungselement vorgesehen ist, vorzugsweise zwei Meßleitungsbildungselemente vorgesehen sind und das Meßleitungselement bzw. die Meßleitungsbildungselemente zusammen mit einem Teil der inneren Oberfläche des Gehäuses die Meßleitung bildet bzw. bilden. Bei dieser besonders bevorzugten Ausführungsform eines erfmdungsgemäßen magnetisch-induktiven Durchflußmeßgeräts bildet also das Meßleitungsbildungselement bzw. bilden die Meßleitungsbildungselemente für sich alleine nicht den Strömungskanal für das strömende Medium, dessen Durchfluß gemessen werden soll. Vielmehr besteht bei dieser Ausführungsform dieser Strömungskanal aus dem Meßleitungsbildungselement bzw. aus den Meßleitungsbildungselementen und einem Teil der inneren Oberfläche des Gehäuses die Meßleitung, also den Strömungskanal für das strömende Medium. Diese Ausführungsform hat vor allem den Vorteil, daß das Meßleitungsbildungselement bzw. die Meßleitungsbildungselemente in besonders einfacher Weise geformt werden können, insbesondere unter Berücksichtigung strömungstechnischer und/oder induktionstechnischer - und damit meßtechnischer - Anforderungen. Vor allem bietet diese Ausführungsform die Möglichkeit, in besonders einfacher Weise die Meßleitung, konkret: die Meßleitungsbildungselemente im mittleren Bereich, also dort, wo üblicherweise die Elektroden vorgesehen sind, eben auszuführen. Es besteht aber auch die Möglichkeit, die Meßleitung, konkret: die Meßleitungsbildungselemente im mittleren Bereich, also dort, wo üblicherweise die Elektroden vorgesehen sind, mit einem Krümmungsradius auszuführen, der größer ist als der Krümmungsradius des Gehäuses.

Nach einer weiteren Lehre der Erfindung, besteht die Meßleitung funktional aus mehreren Abschnitten mit vorzugsweise unterschiedlichen Krümmungsradien. Mit "funktional" soll dabei zum Ausdruck gebracht werden, daß die Meßleitung sowohl mehrstückig als auch einstückig ausgeführt sein kann; vorzugsweise ist die Meßleitung jedoch einstückig ausgeführt.

Bei der zuletzt beschriebenen Ausführungsform eines erfindungsgemäßen magnetisch-induktiven Durchflußmeßgeräts besteht vorzugsweise die Meßleitung funktional aus drei Abschnitten, nämlich einem Mittelabschnitt und jeweils einem an den Mittelabschnitt anschließenden Endabschnitt. Dabei stellen die Endabschnitte den Strömungseinlaß bzw. den Strömungsauslaß dar.

Noch vorteilhafter kann eine Ausführungsform sein, bei der die Meßleitung funktional aus fünf Abschnitten besteht, nämlich einem Mittelabschnitt, einem jeweils an den Mittelabschnitt anschließenden Übergangsabschnitt und einem jeweils an die Übergangsabschnitte anschließenden Endabschnitt.

Bei den zuletzt beschriebenen Ausführungsformen erfindungsgemäßer magnetisch-induktiver Durchflußmeßgeräte können, wie bereits gesagt, die einzelnen Abschnitte unterschiedliche Krümmungsradien haben. Besteht die Meßleitung funktional aus drei Abschnitten, so empfiehlt sich eine Ausführungsform, bei der der Krümmungsradius des Mittelabschnitts größer ist als der Krümmungsradius der Endabschnitte. Besteht die Meßleitung funktional aus fünf Abschnitten, so empfiehlt sich eine Ausführungsform, bei der der Krümmungsradius des Mittelabschnitts auch größer ist als der Krümmungsradius der Übergangsabschnitte. Dabei kann sich eine Ausführungsform empfehlen, bei der die Endabschnitte einen gegen unendlich gehenden Krümmungsradius haben und vorzugsweise sich unter einem Winkel von etwa 40° bis 50°, insbesondere von etwa 45° zur Längsachse der Meßleitung an die Übergangsabschnitte anschließen.

Bei magnetisch-induktiven Durchflußmeßgeräten werden eine möglichst kurze Einbaulänge, ein möglichst geringer Druckabfall und eine möglichst geringe Verformung infolge des im strömenden Medium herrschenden Drucks angestrebt. Diese dreifache Zielsetzung erfordert Kompromisse. Unter Berücksichtigung der aufgezeigten Zielsetzungen stellt die Ausführungsform, die zuletzt beschrieben worden ist, also die Ausführungsform, bei der die Meßleitung funktional aus mehreren Abschnitten mit vorzugsweise unterschiedlichen Krümmungsradien besteht, eine Optimierung dar.

Unter anderen Gesichtspunkten ist eine bevorzugte Ausführungsform eines erfindungsgemäßen magnetisch-induktiven Durchflußmeßgeräts dadurch gekennzeichnet, daß die Wandstärke der Meßleitung im mittleren Bereich geringer ist als am Anfang der Meßleitung und an deren Ende. Dabei hat man mit einem Zielkonflikt "zu kämpfen". Einerseits sollte die Wandstärke der Meßleitung bzw. des Meßleitungsbildungselements oder der Meßleitungsbildungselemente im mittleren Bereich der Meßleitung besonders gering sein, weil eine solche besonders geringe Wandstärke dazu führt, daß die Meßleitung bzw. das Meßleitungsbildungselement oder die Meßleitungsbildungselemente im mittleren Bereich der Meßleitung in besonders einfacher Weise so geformt werden kann bzw. werden können, wie dies aus strömungstechnischer und induktionstechnischer, damit insgesamt aus meßtechnischer Sicht anzustreben ist. Andererseits ist jedoch - unter Berücksichtigung des in der Meßleitung herrschenden Drucks - eine bestimmte Druckbeanspruchbarkeit der Meßleitung auch im mittleren Bereich erforderlich. Dieser Zielkonflikt ist weitgehend dadurch gelöst, daß bei dem erfindungsgemäßen magnetisch-induktiven Durchflußmeßgerät, wie weiter oben ausgeführt, im mittleren Bereich der Meßleitung mindestens eine die Meßleitung mit dem Gehäuse verbindende Verstärkung vorgesehen ist.

Bei dem erfindungsgemäßen magnetisch-induktiven Durchflußmeßgerät ist, wie schon mehrfach ausgeführt, im mittleren Bereich der Meßleitung mindestens eine die Meßleitung mit dem Gehäuse verbindende Verstärkung vorgesehen, vorzugsweise als mindestens eine Stütze ausgeführt. Dann, wenn die Wandstärke der Meßleitung bzw. des Meßleitungsbildungselements oder der Meßleitungsbildungselemente im mittleren Bereich geringer als am Anfang der Meßleitung und an deren Ende ist, insbesondere dann, wenn die Wandstärke auch absolut gesehen relativ gering ist, aber nicht nur dann, empfiehlt sich eine besondere Ausführungsform, die dadurch gekennzeichnet ist, daß die Meßleitung bzw. das Meßleitungselement oder die Meßleitungselemente ein der Abstützung des Stützrings bzw. die Meßabstützelemente bzw, der Abstützung der Stützen dienende Abschlußelemente aufweist bzw. aufweisen.

Eingangs ist ausgeführt worden, daß die zu einem magnetisch-induktiven Durchflußmeßgerät gehörende Magnetfelderzeugungseinrichtung üblicherweise zwei bestromte Magnetspulen aufweist. Dann können bei der zuletzt beschriebenen Ausfuhrungsform eines erfindungsgemäßen magnetisch-induktiven Durchflußmeßgeräts die Abstützelemente als zu den Magnetspulen der Magnetfelderzeugungseinrichtung gehörende Durchgänge ausgeführt sein.

Für magnetisch-induktive Durchflußmeßgeräte wird in der Regel für die Meßleitung ein nicht-magnetisches Material verwendet. Das kann grundsätzlich ein Kunststoff sein, häufig wird jedoch nicht-rostender Stahl, also Edelstahl, verwendet. Auch bei dem erfindungsgemäßen magnetisch-induktiven Durchflußmeßgerät kann die Meßleitung bzw. das Meßleitungsbildungselement oder die Meßleitungsbildungselemente aus nicht-rostendem Stahl bestehen, jedoch ist auch die Verwendung von magnetisch-weichem Stahl möglich.

Wie bei magnetisch-induktiven Durchflußmeßgeräten üblich, empfiehlt es sich, auch bei dem erfindungsgemäßen magnetisch-induktiven Durchflußmeßgerät innen zumindest teilweise eine elektrisch isolierende Deckschicht vorzusehen, und zwar dann, wenn nur teilweise eine elektrisch isolierende Deckschicht vorgesehen wird, im Bereich der Elektroden. Es gibt jedoch viele Gründe dafür, auch das erfindungsgemäße magnetisch-induktive Durchflußmeßgerät innen vollständig mit einer elektrisch isolierenden Deckschicht zu versehen.

In bezug auf den konstruktiven Aufbau und die fertigungstechnische Realisierung ist schließlich für das erfindungsgemäße magnetisch-induktive Durchflußmeßgerät noch vorgesehen, daß die Meßleitung bzw. das Meßleitungsbildungselement oder die Meßleitungsbildungselemente kürzer ist bzw. sind als das Gehäuse und/oder daß die Meßleitung bzw. das Meßleitungsbildungselement oder die Meßleitungsbildungselemente und das Gehäuse durch Schweißen miteinander verbunden sind.

Im einzelnen gibt es nun verschiedene Möglichkeiten, erfindungsgemäße magnetisch-induktive Durchflußmeßgeräte im einzelnen zu realisieren bzw. auszugestalten und/oder weiterzubilden. Dazu wird auf die dem Patentanspruch 1 nachgeordneten Patentansprüche und auf die nachfolgende Beschreibung eines Ausführungsbeispiels in Verbindung mit der Zeichnung verwiesen; in der Zeichnung zeigen
- Fig. 1: perspektivisch und stark schematisch, einen Längsschnitt durch ein bevorzugtes Ausführungsbeispiel eines erfindungsgemäßen magnetisch-induktiven Durchflußmeßgeräts,
- Fig. 2: eine graphische Darstellung eines bevorzugten Ausführungsbeispiels einer zu einem erfindungsgemäßen magnetisch-induktiven Durchflußmeßgerät gehörenden Meßleitung und
- Fig. 3: eine graphische Darstellung eines weiteren bevorzugten Ausführungsbeispiels einer zu einem erfindungsgemäßen magnetischinduktiven Durchflußmeßgerät gehörenden Meßleitung.

Das in den Figuren - im wesentlichen nur schematisch - dargestellte magnetisch-induktive Durchflußmeßgerät ist bestimmt zur Durchflußmessung eines strömenden Mediums; es weist, funktionsnotwendig, auf eine Meßleitung 1, eine nicht dargestellte Magnetfelderzeugungseinrichtung zur Erzeugung eines die Meßleitung 1 wenigstens teilweise durchsetzenden Magnetfeldes, zu der zwei nicht dargestellte Magnetspulen gehören, und zwei ebenfalls nicht dargestellte Elektroden zum Abgreifen einer in dem strömenden Medium induzierten Meßspannung. Zu dem in den Figuren dargestellten magnetisch-induktiven Durchflußmeßgerät gehört weiter ein die Meßleitung 1, die Magnetfelderzeugungseinrichtung und die Elektroden aufnehmendes Gehäuse 2, das einen kreisförmigen Querschnitt hat und im dargestellten Ausführungsbeispiel beidseitig mit Flanschen 3, 4 versehen ist.

Für das erfindungsgemäße magnetisch-induktive Durchflußmeßgerät gilt zunächst, daß im mittleren Bereich der Meßleitung 1 mindestens eine die Meßleitung 1 mit dem Gehäuse 2 verbindende Verstärkung vorgesehen ist. Vorzugsweise ist als Verstärkung mindestens eine Stütze vorgesehen. Insbesondere dann, aber nicht nur dann, wenn als Verstärkung eine und nur eine Stütze vorgesehen ist, kann es sich empfehlen, was jedoch nicht dargestellt ist, im mittleren Bereich der Meßleitung einen die Meßleitung umfassenden Verstärkungsring vorzusehen und die Meßleitung über den Verstärkungsring und die Verstärkung, gegebenenfalls also über die als Verstärkung vorgesehene Stütze, mit dem Gehäuse zu verbinden.

Zwar kann bei einem erfindungsgemäßen magnetisch-induktiven Durchflußmeßgerät als Verstärkung nur eine Stütze zwischen der Meßleitung und dem Gehäuse vorgesehen sein, ein solcher unsymmetrischer Aufbau empfiehlt sich jedoch nicht. Vielmehr sind, wie in den Figuren auch dargestellt, zwei die Meßleitung 1 mit dem Gehäuse 2 verbindende Stützen 5, 6 vorgesehen.

Zuvor ist bereits darauf hingewiesen worden, daß bei einem erfindungsgemäßen magnetisch-induktiven Durchflußmeßgerät im mittleren Bereich der Meßleitung ein die Meßleitung umfassender Verstärkungsring vorgesehen sein kann. Auch das Gehäuse kann verstärkt sein, und zwar dadurch, daß es in seinem mittleren Bereich mit einem - innen oder außen angeordneten - Verstärkungsring versehen ist, was in den Figuren jedoch nicht dargestellt ist.

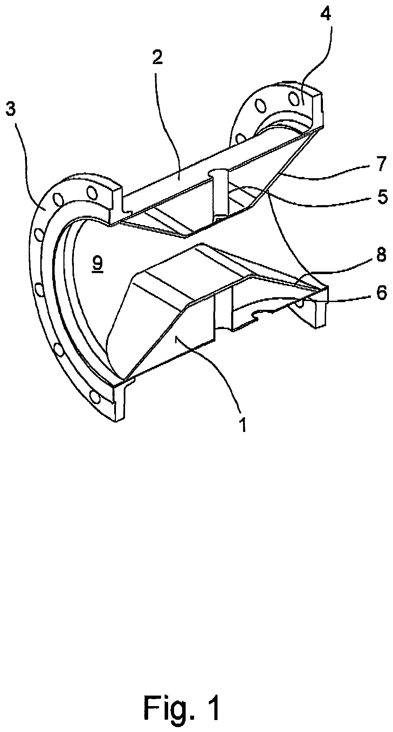

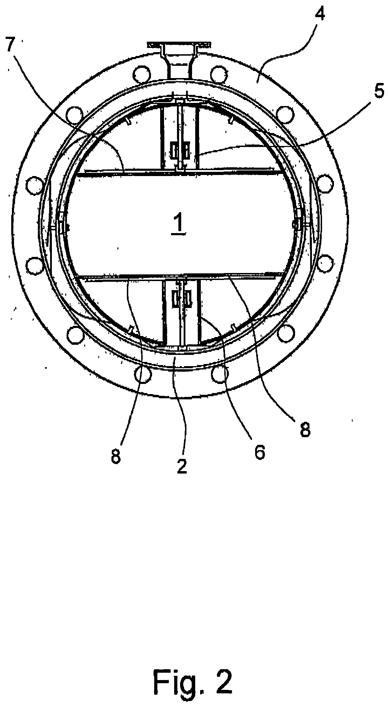

Wie sowohl die Fig. 1 als auch die Fig. 2 zeigt, gilt für das dargestellte Ausführungsbeispiel eines erfindunsgemäßen magnetisch-induktiven Durchflußmeßgeräts, das die Stützen 5, 6 als kreisringförmige Hohlzylinder ausgeführt sind. Das gibt die - nicht dargestellte - Möglichkeit, auf den Stützen oder - bei entsprechender Ausführung - innerhalb der Stützen zur Magnetfelderzeugungseinrichtung gehörende Magnetspulen vorzusehen und/oder innerhalb der Stützen die Elektroden vorzusehen.

Bei einem erfindungsgemäßen magnetisch-induktiven Durchflußmeßgerät kann die Meßleitung, wie üblich, den Strömungskanal für strömende Medien, dessen Durchfluß gemessen werden soll, darstellen. In den Figuren, insbesondere in Fig. 1, ist jedoch eine bevorzugte Ausführungsform des erfindungsgemäßen magnetisch-induktiven Durchflußmeßgeräts dargestellt, die abweichend von der zuvor angesprochenen üblichen Ausführungsform realisiert ist, die nämlich dadurch gekennzeichnet ist, daß innerhalb des Gehäuses 2 zwei Meßleitungsbildungselemente 7, 8 vorgesehen sind und die Meßleitungsbildungselemente 7, 8 zusammen mit einem Teil der inneren Oberfläche 9 des Gehäuses 2 die Meßleitung 1 bilden. Bei dieser besonders bevorzugten Ausführungsform eines erfindungsgemäßen magnetisch-induktiven Durchflußmeßgeräts bilden also die Meßleitungsbildungselemente 7, 8 für sich alleine nicht den Strömungskanal für das strömende Medium, dessen Durchfluß gemessen werden soll, also für sich alleine nicht die Meßleitung 1. Vielmehr besteht bei dieser Ausführungsform die Meßleitung 1 aus den Meßleitungsbildungselementen 7, 8 und einem Teil der inneren Oberfläche 9 des Gehäuses 2. Das hat vor allem dem Vorteil, daß die Meßleitungsbildungselemente 7, 8 in besonders einfacher Weise geformt werden können, insbesondere unter Berücksichtigung strömungstechnischer und/oder induktionstechnischer - und damit meßtechnischer - Anforderungen. Diese Ausführungsform bietet vor allem auch die Möglichkeit, in besonders einfacher Weise die Meßleitung 1, konkret: die Meßleitungsbildungselemente 7, 8 im mittleren Bereich, also dort, wo üblicherweise die Elektroden vorgesehen sind, wie das die Figuren zeigen, eben auszuführen. Nicht dargestellt ist die auch gegebene Möglichkeit, die Meßleitung, konkret: die Meßleitungsbildungselemente im mittleren Bereich mit einem Krümmungsradius auszuführen, der größer ist als der Krümmungsradius des Gehäuses.

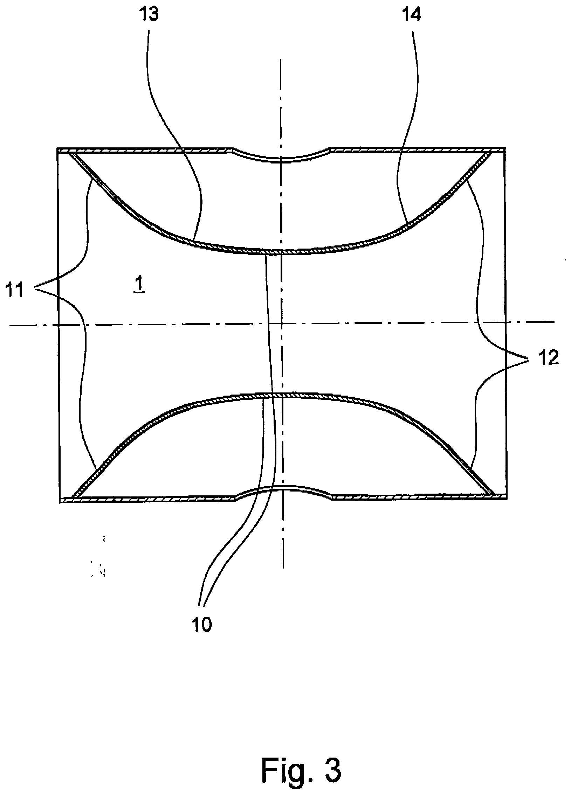

Wie weiter oben ausgeführt, ist eine weitere Lehre der Erfindung, der besondere Bedeutung zukommt, dadurch gekennzeichnet, daß die Meßleitung 1 funktional aus mehreren Abschnitten mit vorzugsweise unterschiedlichen Krümmungsradien besteht. Im einzelnen kann die Meßleitung funktional aus drei Abschnitten bestehen, nämlich einem Mittelabschnitt 10 und jeweils einen an den Mittelabschnitt 10 anschließenden Endabschnitt 11, 12. Das in Fig. 3 dargestellte Ausführungsbeispiel geht jedoch darüber hinaus. Bei diesem Ausführungsbeispiel besteht die Meßleitung 1 funktional aus fünf Abschnitten, nämlich einem Mittelabschnitt 10, einem jeweils an den Mittelabschnitt 10 anschließenden Übergangsabschnitt 13, 14 und jeweils einem an die Übergangsabschnitte 13, 14 anschließenden Endabschnitt 11, 12. Im einzelnen gilt dabei, daß der Krümmungsradius des Mittelabschnitts 10 größer ist als der Krümmungsradius der Übergangsabschnitte 13, 14, daß die Endabschnitte 11, 12 einen gegen Unendlich gehenden Krümmungsradius haben und daß die Endabschnitte 11, 12 sich unter einem Winkel von etwa 40° bis 50°, vorzugsweise von etwa 45° zur Längsachse der Meßleitung 1 an die Übergangsabschnitte 13, 14 anschließen.

In den Figuren ist nicht dargestellt, gleichwohl ist von besonderer Bedeutung eine Ausführungsform des erfindungsgemäßen magnetisch-induktiven Durchflußmeßgeräts, bei der die Wandstärke der Meßleitung 1 im mittleren Bereich geringer ist als am Anfang der Meßleitung 1 und an deren Ende. Nach einer solchen Ausführungsform hat man mit einem Zielkonflikt "zu kämpfen". Einerseits soll die Wandstärke der Meßleitung 1 bzw. der Meßleitungsbildungselemente 7, 8 - auch - im mittleren Bereich der Meßleitung 1 besonders gering sein, weil bei einer besonders geringen Wandstärke die Meßleitung 1 bzw. die Meßleitungsbildungselemente 7, 8 in besonders einfacher Weise so geformt werden kann bzw. können, wie dies aus strömungstechnischer und induktionstechnischer, damit insgesamt aus meßtechnischer Sicht anzustreben ist. Da nun in der Meßleitung ein bestimmter Druck herrscht, ist andererseits eine bestimmte Druckbeanspruchbarkeit der Meßleitung 1 auch im mittleren Bereich erforderlich. Erfindungsgemäß ist dieser Zielkonflikt gelöst, nämlich dadurch, daß bei dem erfindungsgemäßen magnetisch-induktiven Durchflußmeßgerät im mittleren Bereich der Meßleitung 1 mindestens eine die Meßleitung 1 mit dem Gehäuse verbindende Verstärkung vorgesehen ist, im Ausführungsbeispiel als Verstärkung zwei Stützen 5, 6 zwischen der Meßleitung 1 und dem Gehäuse 2 vorgesehen sind.

Schließlich sei noch darauf hingewiesen, daß, was in den Figuren nicht im einzelnen dargestellt ist, die Meßleitung 1 zumindest teilweise mit einer elektrisch isolierenden Deckschicht versehen sein kann, die Meßleitung 1 bzw. die Meßleitungsbildungselemente 7, 8 kürzer sein können als das Gehäuse 2 und/ oder daß die Meßleitung 1 bzw. die Meßleitungsbildungselemente 7, 8 und das Gehäuse 2 durch Schweißen miteinander verbunden sein können.

## Patentansprüche

1. Magnetisch-induktives Durchflußmeßgerät zur Durchflußmessung eines strömenden Mediums mit einer Meßleitung, mit einer Magnetfelderzeugungseinrichtung zur Erzeugung eines die Meßleitung wenigstens teilweise durchsetzenden Magnetfeldes, mit zwei Elektroden zum Abgreifen einer in dem strömenden Medium induzierten Meßspannung und mit einem die Meßleitung, die Magnetfelderzeugungseinrichtung und die Elektroden aufnehmenden Gehäuse,
**dadurch gekennzeichnet,**
**dass** die Meßleitung (1) über die Länge einen veränderlichen Querschnitt aufweist und der Querschnitt im mittleren Bereich der Meßleitung (1) geringer ist als am Anfang der Meßleitung (1) und an deren Ende und wobei im mittleren Bereich der Meßleitung (1) mindestens eine die Meßleitung (1) mit dem Gehäuse (2) verbindende Verstärkung vorgesehen ist,
**daß** als Verstärkung mindestens eine Stütze vorgesehen ist, vorzugsweise mindestens zwei die Meßleitung (1) mit dem Gehäuse (2) verbindende Stützen (5, 6) vorgesehen sind und
**dass** die Meßleitung (1) durch die Verstärkung eine notwendige Druckbeanspruchbarkeit erlangt.

2. Magnetisch-induktives Durchflußmeßgerät nach Anspruch 1, **dadurch gekennzeichnet, daß** im mittleren Bereich der Meßleitung ein die Meßleitung umfassender Verstärkungsring vorgesehen ist und die Meßleitung über den Verstärkungsring und die Verstärkung mit dem Gehäuse verbunden ist.

3. Magnetisch-induktives Durchflußmeßgerät nach Anpruch 1 oder 2, **dadurch gekennzeichnet, daß** das Gehäuse in seinem mittleren Bereich mit einem - innen oder außen angeordneten - Verstärkungsring versehen ist.

4. Magnetisch-induktives Durchflußmeßgerät nach einem der Ansprüche 1 bis 3, **dadurch gekennzeichnet, daß** zumindest einzelne Stützen (5, 6) als Hohlzylinder ausgeführt sind, vorzugsweise als kreisringförmige Hohlzylinder.

5. Magnetisch-induktives Durchflußmeßgerät nach einem der Ansprüche 1 bis 4, **dadurch gekennzeichnet, daß** auf den die Meßleitung mit dem Gehäuse verbindenden Stützen oder innerhalb der Stützen die zur Magnetfelderzeugungseinrichtung gehörenden Magnetspulen vorgesehen sind.

6. Magnetisch-induktives Durchflußmeßgerät nach Anspruch 4 oder 5, **dadurch gekennzeichnet, daß** innerhalb der die Meßleitung mit dem Gehäuse verbindenden Stützen die Elektroden vorgesehen sind.

7. Magnetisch-induktives Durchflußmeßgerät nach einem der Ansprüche 1 bis 6, **dadurch gekennzeichnet, daß** innerhalb des Gehäuses (1) mindestens ein Meßleitungsbildungselement (7), vorzugsweise zwei Meßleitungsbildungselemente (7, 8) vorgesehen ist bzw. sind und das Meßleitungsbildungselement (7) bzw. die Meßleitungsbildungselemente (7, 8) zusammen mit einem Teil der inneren Oberfläche (9) des Gehäuses (2) die Meßleitung bildet bzw. bilden und daß vorzugsweise die Meßleitung (1) bzw. das Meßleitungsbildungselement (7) oder die Meßleitungsbildungselemente (7, 8) im mittleren Bereich eben ausgeführt ist bzw. sind.

8. Magnetisch-induktives Durchflußmeßgerät nach einem der Ansprüche 1 bis 7, **dadurch gekennzeichnet, daß** die Meßleitung bzw. das Meßleitungsbildungselement oder die Meßleitungsbildungselemente mit einem Krümmungsradius ausgeführt ist bzw. sind, der größer ist als der Krümmungsradius des Gehäuses.

9. Magnetisch-induktives Durchflußmeßgerät nach einem der Ansprüche 1 bis 8, **dadurch gekennzeichnet, daß** die Meßleitung (1) funktional aus mehreren Abschnitten mit unterschiedlichen Krümmungsradien besteht.

10. Magnetisch-induktives Durchflußmeßgerät nach Anspruch 9, **dadurch gekennzeichnet, daß** die Meßleitung (1) funktional aus drei Abschnitten besteht, nämlich einem Mittelabschnitt (10) und jeweils einem an den Mittelabschnitt (10) anschließenden Endabschnitt (11, 12), vorzugsweise funktional aus fünf Abschnitten besteht, nämlich einem Mittelabschnitt (10), einem jeweils an den Mittelabschnitt (10) anschließenden Übergangsabschnitt (13, 14) und jeweils einem an die Übergangsabschnitte (13, 14) anschließenden Endabschnitt (11, 12).

11. Magnetisch-induktives Durchflußmeßgerät nach Anspruch 10, **dadurch gekennzeichnet, daß** der Krümmungsradius des Mittelabschnitts (10) größer ist als der Krümmungsradius der Endabschnitte (11, 12) und daß vorzugsweise der Krümmungsradius des Mittelabschnitts (10) größer ist als der Krümmungsradius der Übergangsabschnitte (13, 14).

12. Magnetisch-induktives Durchflußmeßgerät nach Anspruch 11, **dadurch gekennzeichnet, daß** die Endabschnitte (11, 12) einen gegen Unendlich gehenden Krümmungsradius haben und vorzugsweise sich unter einem Winkel von etwa 40° bis 50°, vorzugsweise von etwa 45°, zur Längsachse der Meßleitung (1) an die Übergangsabschnitte (13, 14) anschließen.

13. Magnetisch-induktives Durchflußmeßgerät nach einem der Ansprüche 1 bis 12, **dadurch gekennzeichnet, daß** die Wandstärke der Meßleitung im mittleren Bereich geringer ist als am Anfang der Meßleitung und an deren Ende.

14. Magnetisch-induktives Durchflußmeßgerät nach einem der Ansprüche 1 bis 13, **dadurch gekennzeichnet, daß** die Meßleitung bzw. das Meßleitungsbildungselement oder die Meßleitungsbildungselemente ein der Abstützung des Stützrings dienendes Abstützelement bzw. der Abstützung der Stützen dienende Abstützelemente aufweist bzw. aufweisen.

15. Magnetisch-induktives Durchflußmeßgerät, wobei zur Magnetfelderzeugungseinrichtung zwei Magnetspulen gehören, nach Anspruch 14, **dadurch gekennzeichnet, daß** die Abstützelemente als zu den Magnetspulen der Magnetfelderzeugungseinrichtung gehörende Polschuhe ausgeführt sind.

## Claims

1. Magnetic-inductive flowmeter for flow measurement of a flowing medium having a measuring tube, having a magnetic field generator for generating a magnetic field at least partially permeating the measuring tube, having two electrodes for tapping into a measurement voltage induced in the flowing medium and having a housing incorporating the measuring tube, the magnetic field generator and the electrode,
**characterized in**
**that** the measuring tube (1) has a variable cross section over its length and the cross section in the mid-section of the measuring tube (1) is smaller than at the beginning of the measuring tube (1) and at its end and wherein at least one reinforcement joining the measuring tube (1) and the housing (2) is provided in the mid-section of the measuring tube (1),
**that** at least one support is provided as reinforcement, preferably at least two supports (5, 6) joining the measuring tube (1) to the housing (2) are provided, and
**that**, due to the reinforcement, the measuring tube (1) attains a necessary pressure durability.

2. Magnetic-inductive flowmeter according to claim 1, **characterized in that** a support ring encompassing the measuring tube is provided in the mid-section of the measuring tube and the measuring tube is joined to the housing via the support ring and the reinforcement.

3. Magnetic-inductive flowmeter according to claim 1 or 2, **characterized in that** the housing is provided with a support ring - arranged inside or outside - in its mid-section.

4. Magnetic-inductive flowmeter according to any one of claims 1 to 3, **characterized in that** at least individual supports (5, 6) are designed as hollow cylinders, preferably as circular hollow cylinders.

5. Magnetic-inductive flowmeter according to any one of claims 1 to 4, **characterized in that** the magnetic coils belonging to the magnetic field generator are provided on the supports joining the measuring tube and the housing or within the supports.

6. Magnetic-inductive flowmeter according to claim 4 or 5, **characterized in that** the electrodes are provided within the supports joining the measuring tube and the housing.

7. Magnetic-inductive flowmeter according to any one of claims 1 to 6, **characterized in that** at least one measuring tube formation member (7), preferably two measuring tube formation members (7, 8) are provided within the housing (2) and the measuring tube formation member (7), respectively, measuring tube formation members (7, 8) form, together with a part of the inner surface of the housing (2), the measuring tube (1) and that preferably the measuring tube (1), respectively, measuring tube formation member (7) or measuring tube formation members (7, 8) are evenly executed in the mid-section.

8. Magnetic-inductive flowmeter according to any one of claims 1 to 7, **characterized in that** the measuring tube, respectively, the measuring tube formation member or measuring tube formation members are executed with a radius of curvature that is greater than the radius of curvature of the housing.

9. Magnetic-inductive flowmeter according to any one of claims 1 to 8, **characterized in that** the measuring tube (1) functionally consists of multiple sections preferably with different radiuses of curvature.

10. Magnetic-inductive flowmeter according to claim 9, **characterized in that** the measuring tube (1) functionally consists of three sections, namely a mid-section (10) and respectively one end section (11, 12) adjacent to the mid section (10), preferable functionally consists of five sections, namely a mid-section (10), respectively one transitional section (13, 14) adjacent to the mid-section (10) and respectively one end section (11, 12) adjacent to the transitional sections (13, 14).

11. Magnetic-inductive flowmeter according to claim 10, **characterized in that** the radius of curvature of the mid-section (10) is greater than the radius of curvature of the end sections (11, 12) and that preferably the radius of curvature of the mid-section (10) is greater than the radius of curvature of the transitional sections (13, 14).

12. Magnetic-inductive flowmeter according to claim 11, **characterized in that** the end sections (11, 12) have a radius of curvature that goes to infinity and preferably are arranged adjacent to the transitional sections (13, 14) with an angle of about 40° to 50°, preferably of about 45° to the center line of the measuring tube (1).

13. Magnetic-inductive flowmeter according to any one of claims 1 to 12, **characterized in that** the wall thickness of the measuring tube in the mid-section is smaller than at the beginning of the measuring tube and at its end.

14. Magnetic-inductive flowmeter according to any one of claims 1 to 13, **characterized in that** the measuring tube, respectively, the measuring tube formation member or the measuring tube formation members have a support member serving to support the support ring or, respectively, a support member serving to support the supports.

15. Magnetic-inductive flowmeter, wherein two magnetic coils belong to a magnetic field generator, according to claim 15, **characterized in that** the support members are designed as pole shoes belonging to the magnetic coils of the magnetic field generator.

## Revendications

1. Débitmètre à induction magnétique pour la mesure de débit d'un fluide s'écoulant, comprenant une conduite de mesure avec un dispositif de génération de champ magnétique pour générer un champ magnétique traversant au moins en partie la conduite de mesure, avec deux électrodes pour capturer une tension de mesure induite dans le fluide s'écoulant et comprenant un boîtier recevant la conduite de mesure, le dispositif de génération de champ magnétique et les électrodes,
**caractérisé en ce que**
la conduite de mesure (1) présente une section transversale variable sur sa longueur et la section transversale, dans la région centrale de la conduite de mesure (1), est inférieure à la section transversale au début de la conduite de mesure (1) et à la fin de celle-ci, et, dans la région centrale de la conduite de mesure (1), au moins un renforcement reliant la conduite de mesure (1) au boîtier (2) est prévu,
**en ce qu'**une tubulure est prévue en tant que renforcement, de préférence au moins deux tubulures (5, 6) reliant la conduite de mesure (1) au boîtier (2) sont prévues et
**en ce que** la conduite de mesure (1) acquiert par le renforcement une capacité de contrainte de compression nécessaire.

2. Débitmètre à induction magnétique selon la revendication 1, **caractérisé en ce que** dans la région centrale de la conduite de mesure est prévue une bague de renforcement entourant la conduite de mesure et la conduite de mesure est connectée au boîtier par le biais de la bague de renforcement et du renforcement.

3. Débitmètre à induction magnétique selon la revendication 1 ou 2, **caractérisé en ce que** le boîtier est pourvu dans sa région centrale d'une bague de renforcement disposée à l'intérieur ou à l'extérieur.

4. Débitmètre à induction magnétique selon l'une quelconque des revendications 1 à 3, **caractérisé en ce qu'**au moins des tubulures individuelles (5, 6) sont réalisées sous forme de cylindres creux, de préférence sous forme de cylindres creux annulaires.

5. Débitmètre à induction magnétique selon l'une quelconque des revendications 1 à 4, **caractérisé en ce que** sur les tubulures reliant la conduite de mesure au boîtier ou à l'intérieur des tubulures sont prévues les bobines magnétiques appartenant au dispositif de génération de champ magnétique.

6. Débitmètre à induction magnétique selon la revendication 4 ou 5, **caractérisé en ce qu'**à l'intérieur des tubulures reliant la conduite de mesure au boîtier sont prévues les électrodes.

7. Débitmètre à induction magnétique selon l'une quelconque des revendications 1 à 6, **caractérisé en ce qu'**à l'intérieur du boîtier (1) est prévu au moins un élément de formation de conduite de mesure (7), de préférence deux éléments de formation de conduite de mesure (7, 8), et l'élément de formation de conduite de mesure (7) ou les éléments de formation de conduite de mesure (7, 8) forment, conjointement avec une partie de la surface intérieure (9) du boîtier (2), la conduite de mesure et **en ce que** de préférence la conduite de mesure (1) ou l'élément de formation de conduite de mesure (7) ou les éléments de formation de conduite de mesure (7, 8) sont réalisés sous forme plane dans la région centrale.

8. Débitmètre à induction magnétique selon l'une quelconque des revendications 1 à 7, **caractérisé en ce que** la conduite de mesure ou l'élément de formation de conduite de mesure ou les éléments de formation de conduite de mesure sont réalisés avec un rayon de courbure qui est supérieur au rayon de courbure du boîtier.

9. Débitmètre à induction magnétique selon l'une quelconque des revendications 1 à 8, **caractérisé en ce que** la conduite de mesure (1) se compose fonctionnellement de plusieurs portions ayant des rayons de courbure différents.

10. Débitmètre à induction magnétique selon la revendication 9, **caractérisé en ce que** la conduite de mesure (1) se compose fonctionnellement de trois portions, à savoir une portion centrale (10) et à chaque fois d'une portion d'extrémité (11, 12) se raccordant à la portion centrale (10), de préférence se compose fonctionnellement de cinq portions, à savoir une portion centrale (10), une portion de transition (13, 14) se raccordant à chaque fois à la portion centrale (10) et à chaque fois une portion d'extrémité (11 ,12) se raccordant à la portion de transition (13, 14).

11. Débitmètre à induction magnétique selon la revendication 10, **caractérisé en ce que** le rayon de courbure de la portion centrale (10) est supérieur au rayon de courbure des portions d'extrémité (11 ,12) et **en ce que** de préférence le rayon de courbure de la portion centrale (10) est supérieur au rayon de courbure des portions de transition (13, 14).

12. Débitmètre à induction magnétique selon la revendication 11, **caractérisé en ce que** les portions d'extrémité (11, 12) présentent un rayon de courbure tendant vers l'infini et se raccordent aux portions de transition (13, 14) de préférence suivant un angle d'environ 40° à 50°, de préférence d'environ 45° par rapport à l'axe longitudinal de la conduite de mesure (1).

13. Débitmètre à induction magnétique selon l'une quelconque des revendications 1 à 12, **caractérisé en ce que** l'épaisseur de paroi de la conduite de mesure dans la région centrale est inférieure à celle au début de la conduite de mesure et à la fin de celle-ci.

14. Débitmètre à induction magnétique selon l'une quelconque des revendications 1 à 13, **caractérisé en ce que** la conduite de mesure ou l'élément de formation de conduite de mesure où les éléments de formation de conduite de mesure présentent un élément de support servant au support de la bague de support ou des éléments de support servant au support des tubulures.

15. Débitmètre à induction magnétique, dans lequel deux bobines magnétiques appartiennent au dispositif de génération de champ magnétique, selon la revendication 14, **caractérisé en ce que** les éléments de support sont réalisés sous forme de pièces polaires appartenant aux bobines magnétiques du dispositif de génération de champ magnétique.
